# FASCICULE DE BREVET EUROPEEN

(11) **EP 1 794 234 B1**
(45) Date de publication et mention de la délivrance du brevet: **08.08.2018**
(21) Numéro de dépôt: 05800640.4
(22) Date de dépôt: 26.09.2005
(51) Int. Cl.: C08L 95/00, C08J 3/00, C08J 3/22, C08L 9/06, C08L 23/08, C08L 53/02, E01C 7/26

(54) **PROCEDE DE FABRICATION D'UN COMPOSE SOLIDE POLYMERE/BITUME, COMPOSE SOLIDE POLYMERE/BITUME ET BITUME/POLYMERE OBTENUS**
VERFAHREN ZUR HERSTELLUNG EINES FESTEN POLYMER/BITUMEN ZUSAMMENSETZUNG; FESTE POLYMER/BITUMEN ZUSAMMENSETZUNG UND DARAUS ERHALTENES BITUMEN/POLYMER
METHOD FOR PRODUCING A POLYMER/BITUMEN COMPOUND, AND POLYMER/BITUMEN AND BITUMEN/POLYMER COMPOUNDS OBTAINED

(30) Priorité: 27.09.2004 FR 0452172
(43) Date de publication de la demande: 13.06.2007
(73) Titulaire: Fenixfalt, 64270 Salies-de-Béarn (FR)
(72) Inventeur: Lopez, Émile, 64270 Salies de Béarn (FR)
(74) Mandataire: Aquinov
(86) Numéro de dépôt international: PCT/FR2005/050784
(87) Numéro de publication internationale: WO 2006/035183

(56) Documents cités:
- EP-A- 0 321 189
- WO-A-97/26299
- WO-A1-99/19423
- US-A- 1 720 101
- US-A- 2 427 077
- US-A- 3 338 849
- US-A- 4 609 695
- R E Robertson ET AL: "Evaluation of Oil Shale Bitumen as a Pavement Asphalt Additive to Reduce Moisture Damage Susceptibility", , 1 January 1991 (1991-01-01), pages 1-14, XP055130792, Laramie, Wyoming, USA Retrieved from the Internet: URL:http://repository.icse.utah.edu/dspace /bitstream/123456789/4906/2/6125739.pdf [retrieved on 2014-07-22]
- J. CONNAN: "Use and trade of bitumen in antiquity and prehistory: molecular archaeology reveals secrets of past civilizations", PHILOSOPHICAL TRANSACTIONS OF THE ROYAL SOCIETY B: BIOLOGICAL SCIENCES, vol. 354, no. 1379, 29 January 1999 (1999-01-29), pages 33-50, XP055018182, ISSN: 0962-8436, DOI: 10.1098/rstb.1999.0358
- James G. Speight: "ASPHALT MATERIALS SCIENCE AND TECHNOLOGY" In: "ASPHALT MATERIALS SCIENCE AND TECHNOLOGY", 1 January 2016 (2016-01-01), Elsevier, Inc., XP055281356, ISBN: 978-0-12-800273-5 page 28,
- Harold Beuther ET AL: "MANUFACTURE AND USE OF SOLID PETROLEUM PITCH", J. M. J. Chem. Sot. J. Ind. En?. Chem. J. Am. Chem. SOC. Division of Industrial and Engineering Chemistry, 2 December 1948 (1948-12-02), pages 66-70, XP055281097, Retrieved from the Internet: URL:http://pubs.acs.org/doi/pdf/10.1021/i3 60005a016 [retrieved on 2016-06-16]
- Maria D Guillen ET AL: "Characterization of coal tar pitches with different softening points by 1 H NMR Role of the different kinds of protons in the thermal process", Z . Fuel Processing Technology, 1 January 1998 (1998-01-01), pages 1-15, XP055237465, Retrieved from the Internet: URL:http://ac.els-cdn.com/S037838209800080 0/1-s2.0-S0378382098000800-main.pdf?_tid=8 181a396-a56d-11e5-b619-00000aab0f6b&acdnat =1450432724_896d184030a786c947dd045ab42958 6e

## Description

La présente invention concerne un procédé de fabrication d'un composé solide polymère/bitume.

Un tel composé solide polymère/bitume est notamment utilisable dans la fabrication d'un bitume/polymère après dissolution dans du bitume liquide. L'invention couvre le bitume/polymère obtenu.

L'invention couvre aussi les enrobés incluant ledit composé solide bitume/polymère ou ledit bitume/polymère.

Les polymères, dans leur grande majorité, en sortie de fabrication sont ensuite divisés, souvent sous forme de granulés, pour faciliter la manipulation, le transport, le stockage, le réchauffage ou les mélanges pour réaliser des compounds de composition adaptée. Ceci est réservé aux polymères ayant certaines propriétés physiques et mécaniques qui le permettent.

Ceci n'est pas toujours le cas et certains élastomères par exemple des élastomères à base de styrène et de butadiène ou d'isoprène conservent, après fabrication, des propriétés collantes. Les caractéristiques physico-chimiques de ces produits conduisent, après un stockage, à une ré-agglomération des granulés, engendrée notamment par leur propre poids.

On sait que les revêtements routiers sont constitués de granulats de nature et de dimensions adaptées, de composition précise, dont la cohésion est assurée par un liant, du bitume facilement rendu liquide par chauffage à 160°C pour donner un ordre d'idée, ce bitume étant issu du raffinage de produits lourds pétroliers.

Le bitume est un composé naturel complexe produit par l'industrie du raffinage. Sa composition est variable en fonction de l'origine des approvisionnements et certains bitumes ne donnent pas satisfaction en raison des sollicitations de plus en plus intenses auxquelles ils sont soumis.

A partir d'un seul produit, il est difficile de corriger tous les paramètres car ces paramètres sont pour la plupart liés et la modification de l'un entraîne l'altération de l'autre. On est obligé de se contenter d'un compromis.

Dans certaines applications d'amélioration de la rugosité de la chaussée, on applique du bitume pour fixer en surface des granulats afin d'augmenter l'adhérence pneumatique/revêtement.

Cette application de bitume permet de limiter également les infiltrations, source de dégradation de la chaussée, ce qui a conduit à généraliser cette pratique. C'est dans cette application que les besoins d'améliorer les caractéristiques des bitumes se sont faits le plus sentir.

Dans le cas de la réfection de l'étanchéité de la surface, on applique aussi le bitume pour limiter les infiltrations, source de dégradation.

Une des améliorations principales a consisté à introduire, dans le bitume, des polymères pour en corriger les défauts, plus particulièrement des élastomères et des thermoplastiques. Ceci permet en effet d'améliorer de façon notable les propriétés mécaniques et la durabilité en augmentant la cohésivité, la capacité de déformation et la récupération élastique sur la plus grande plage avec les températures extrêmes d'usage.

Cet ajout consiste en une introduction de quelques pourcents de polymère dans le bitume, de 3 à 7% pour donner un ordre d'idées.

Pour réaliser cette introduction, le bitume liquide, porté à une température comprise entre 140 et 180°C est brassé avec le polymère par tout moyen adapté et notamment des agitateurs verticaux.

Le temps de dissolution est sensiblement proportionnel à la quantité de polymère introduite et donc à la concentration recherchée.

Pour un batch de 20 à 50 tonnes, la durée peut atteindre 24 heures du fait d'un temps aléatoire de macération/gonflement dépendant de la nature du bitume et des caractéristiques du polymère.

Les bitumes/polymères ainsi obtenus ont de fortes viscosités et doivent être stockés à chaud et à des températures supérieures à celles des bitumes exempts de polymères.

La gamme des températures varie de 170°C à 200°C suivant l'utilisation, conservation ou pompage par exemple.

Le transport est donc rendu très compliqué et les coûts induits interdisent le transport sur de longues distances.

Dans certains cas particuliers, moyennant des containers spéciaux avec des systèmes de réchauffage interne permettant la remise en température après le transport, on peut envisager des transports longue distance. Néanmoins, les applications restent très limitées.

Si une logistique de transport devait être mise en place, elle nécessiterait des investissements extrêmement lourds.

Or, le développement de tels produits à paramètres physico-chimique améliorés passe aussi par des mises en oeuvre dans des pays qui en ont le besoin et qui sont souvent éloignés des sites de production. De tels pays ont de faibles capacités financières et requièrent des coûts compatibles avec ces faibles capacités économiques.

On entend pour la suite de la description comme bitume liquide, le bitume d'origine pétrolière issu du raffinage et apte à être rendu liquide à des températures de l'ordre de 150°C.

On entend pour la suite de la description par bitume solide, le bitume issu de produits tels que de l'asphaltite d'origine minière.

La présente invention propose un procédé de fabrication d'un composé intermédiaire solide : bitume-solide/polymère, notamment pour la fabrication d'un bitume-liquide/polymère qui répond à cette problématique et qui permet une dissolution facile du polymère au moment de l'introduction du composé intermédiaire solide dans du bitume liquide pour fabriquer un bitume-liquide/polymère mais surtout qui permet l'obtention d'un composé intermédiaire solide qui peut être conservé sous forme divisée, en vrac et à température ambiante.

L'invention concerne aussi l'obtention d'un bitume liquide/polymère obtenu à partir de ce composé intermédiaire solide.

Par ailleurs, l'usage du composé intermédiaire solide permet d'obtenir des enrobés directement dans un malaxeur d'enrobage d'une usine de fabrication d'enrobés, des enrobés dont le bitume est soit un bitume-liquide/polymère obtenu in situ ou un bitume-liquide/polymère régénéré par modification chimique lors d'une opération de recyclage à chaud de vieux enrobés.

L'invention est maintenant décrite en détail et complétée par des exemples de réalisation.

On connaît des bitumes solides qui se présentent sous forme de roches, susceptibles d'être broyées par leur fragilité, c'est-à-dire leur propension à se briser sous des chocs. Il s'agit d'asphaltite d'origine minière.

Par contre la rigidité de ces bitumes solides et le faible coefficient de pénétration, inférieur à zéro 100^{ème} de millimètre, les rendent impropres à leur utilisation comme bitume routier analogue au bitume liquide d'origine pétrolière.

Le procédé selon la présente invention consiste à mélanger un polymère apte la fabrication d'un bitume-liquide/polymère avec un tel bitume solide.

Le bitume solide assure ainsi une diminution du caractère visqueux du polymère, facilitant le cisaillement et la rupture, autorisant ainsi la présentation sous forme divisée, granulaire.

La présence de bitume solide dans le polymère, sous forme divisée, évite aussi la ré-agglomération des granulés avec les conséquences que présenterait un tel mottage.

Si certaines compositions riches en polymère ou du fait même des propriétés du polymère, viennent à conduire à un certain mottage, il est possible d'introduire des agents tels que de la silice, du talc ou du calcaire qui suppriment alors grandement ce risque.

On peut ainsi donner les exemples suivants de réalisation d'un composé intermédiaire solide de polymère/bitume solide selon l'invention.

On mélange les produits suivants :
- copolymère d'éthylène vinyle acétate (EVA), copolymères élastomères de type stéréo régulés, di ou tri blocs, styrène butadiène (SB) ou styrène butadiène styrène (SBS),
- bitume solide comprenant :
   ▪ de l'asphaltite solide d'origine minière : pénétration à 25°C, zéro 100^{ème} de millimètre, température de ramollissement 120°C, perte de masse au chauffage à 163°C pendant 5 heures inférieure à 0,10%, matières insolubles 8%, ou
   ▪ du coke bitumineux : pénétration à 25°C, zéro 100^{ème} de millimètre, température de ramollissement 130°C, perte de masse au chauffage à 163°C pendant 5 heures inférieure à 0,15%.

Le polymère est introduit à raison de 5 à 90% dans le mélange.

Le polymère est chauffé entre 110°C et 190°C et le bitume solide est porté à une température de 200 à 250°C.

L'ensemble mélangé est malaxé de façon puissante pour assurer une bonne homogénéité de la composition.

Le composé obtenu est ensuite divisé à température ambiante.

On obtient ainsi le composé intermédiaire solide suivant l'invention.

Ce composé intermédiaire solide peut être ensuite associé à un bitume liquide.

### Exemple 1 :

On mélange :
- 50% de bitume liquide de pénétration 180 centièmes de millimètres, et
- 50% d'un composé intermédiaire solide selon la présente invention constitué de 60% de polymère styrène butadiène (SB) di blocs.

On constate de façon surprenante que la durée de dissolution du composé intermédiaire solide, donc des 30% du polymère qu'il contient, est diminuée de 60% par rapport à la dissolution de 30% de ce même polymère directement dans du bitume liquide de pénétration 180 centièmes de millimètres.

On a effectué des contrôles de mottage de ce composé intermédiaire solide qui devrait être fortement sujet à ce phénomène par les propriétés auto agglomérantes importantes du polymère utilisé.

Les granulés ont environ 1 à 2 millimètres de côté.

On place ces granulés à 30°C sous une charge de 4 kg/m² sans constater de mottage après une période de 1 mois.

### Exemple 2 :

On mélange :
- 95% de bitume liquide, à 70 centièmes de millimètres de pénétration, porté à 170°C, et
- 5% d'un composé solide selon la présente invention, granulé, constitué de 60% de polymère styrène butadiène (SB) di blocs, la balance étant un bitume solide.

Après mélange, on ajoute 0,07% de soufre élémentaire en poudre avec une agitation supplémentaire pour assurer la dispersion de ce soufre.

Le bitume-liquide/polymère obtenu présente les paramètres suivants :
Pénétration 56 centièmes de millimètres, température de ramollissement TBA de 62°C et récupération élastique de 51%.

### Exemple 3 :

On mélange :
- 91,6% de bitume liquide, à 70 centièmes de millimètres de pénétration, porté à 170°C, et
- 8,4% d'un composé solide selon la présente invention constitué de 60% de polymère styrène butadiène (SB) di blocs, la balance étant du bitume solide.

Après mélange, on ajoute aussi, comme précédemment, 0,07% de soufre élémentaire en poudre avec une agitation supplémentaire pour assurer la dispersion de ce soufre.

Le bitume-liquide/polymère obtenu présente les paramètres suivants : Pénétration 59 centièmes de millimètres, température de ramollissement TBA de 67°C et récupération élastique de 64%.

Dans ces exemples 2 et 3, on constate que les caractéristiques du bitume-liquide/polymère obtenu par introduction du composé intermédiaire solide sont identiques à celles du bitume-liquide/polymère obtenu par dissolution directe du polymère seul directement dans ledit polymère liquide, dans les mêmes proportions, mais avec une durée de 50% plus importante que celle de la dissolution directe.

### Exemple 4 :

On mélange :
- 90% de bitume liquide, à 70 centièmes de millimètres de pénétration porté à 170°C, et
- 10% d'un composé solide selon la présente invention contenant 50% d'un mélange de deux polymères avec 30% de styrène butadiène styrène (SBS) tri blocs linéaire et 20% d'éthylène vinyle acétate (EVA), la balance étant du bitume solide.

Après mélange, le bitume-liquide/polymère obtenu présente les paramètres suivants :
Pénétration 57 centièmes de millimètres, température de ramollissement TBA de 59°C et récupération élastique de 66%.

Ces propriétés sont comparables à celles obtenues pour le même bitume modifié préparé par dissolution directe de 3% de SBS et de 2% d'EVA dans du bitume de pénétration 70 centièmes de millimètres porté à 170°C.

On constate donc la possibilité de réaliser des bitumes liquides/polymères à partir d'un composé intermédiaire solide selon l'invention en conservant au moins les propriétés des bitumes liquides/polymères réalisés par dissolution directe du polymère dans le bitume liquide mais ceci avec un gain de temps de dissolution significatif de 50% et plus et des possibilités de manipulation améliorées, des possibilités de stockage sans mottage donc des possibilités de transport fortement facilitées du composé intermédiaire solide.

On peut fabriquer des enrobés en recourant à du bitume liquide ayant été lui-même obtenu à partir du bitume-solide/polymère selon l'invention.

On peut ainsi donner l'exemple suivant :
Fabrication d'un enrobé routier de type 0/12 pour couche de roulement à base de bitume modifié.

L'enrobé comprend ainsi :
- mélange d'agrégats minéraux de granulométrie 0/12,
- 8,5 % de filler, et
- bitume-liquide/polymère 5,7 parties pour cent.

Les agrégats et filler doivent être portés à une température de 180°C et le bitume-liquide/polymère doit être porté à une température de 170°C.

Ainsi pour une quantité de 4000 g d'agrégats on introduit 228 g de bitume-liquide/polymère de l'exemple 3.

Dans un mode de fabrication, on réalise le bitume-liquide/polymère in situ directement dans le malaxeur d'enrobage par mélange successivement aux granulats portés à 180°C de :
- 195,8 g de bitume à 62 centièmes de millimètres de pénétration chauffé à 170°C (soit 86,32 % de bitume)
- 19,2 g de composé intermédiaire solide bitume-solide/polymère selon la présente invention tel que celui des exemples 1 à 3 (soit 8,42 % de composé intermédiaire solide), et
- 12 g de solution diluée de polysulfure organique dans de l'huile minérale (soit 5,26% de polysulfure).

Les caractéristiques et propriétés mécaniques des enrobés obtenus avec ces bitumes polymères selon l'invention, préparés sous deux formes différentes, sont identiques.

Dans le cas d'un vieil enrobé que l'on souhaite recycler, il convient de porter sa température entre 160 et 190°C pour liquéfier le bitume vieilli et dispersé ce qu'il contient.

L'ajout d'additifs et notamment d'un composé intermédiaire solide bitume-solide/polymère selon l'invention permet de régénérer le bitume vieilli en un bitume conventionnel ou de régénérer et reconstituer le bitume en un nouveau liant bitumineux de type bitume/polymère au sein d'un enrobé de récupération dans le cadre de son recyclage.

## Revendications

1. Procédé de fabrication d'un composé intermédiaire solide, prévu pour être incorporé dans un bitume liquide d'origine pétrolière pour la fabrication d'un bitume-liquide/polymère comprenant les étapes suivantes :
- mélange à chaud d'un polymère apte à la fabrication de ce bitume-liquide/polymère avec de l'asphaltite d'origine minière,
- refroidissement, et
- division du composé intermédiaire ainsi refroidi pour obtenir un bitume-solide/polymère prêt à être introduit dans ledit bitume liquide d'origine pétrolière.

2. Procédé de fabrication d'un composé intermédiaire solide selon la revendication 1, **caractérisé en ce que** le mélange est effectué mécaniquement, de façon puissante, en portant le polymère à une température comprise entre 110°C et 190°C et l'asphaltite à une température comprise entre 200°C et 250°C.

3. Composé intermédiaire asphaltite/polymère, obtenu par la mise en oeuvre du procédé selon la revendication 1 ou 2, **caractérisé en ce qu'**il comprend de 5 à 90% de polymère.

4. Bitume-liquide/polymère comprenant une proportion de 5 à 50% du composé intermédiaire selon la revendication 3, introduits dans un bitume liquide de pénétration comprise entre 10 et 300 centièmes de millimètres.

5. Bitume-liquide/polymère selon la revendication 4, **caractérisé en ce qu'**il comprend également du soufre.

6. Enrobé routier incluant du bitume-liquide/polymère directement issu du composé intermédiaire selon la revendication 3 ou du bitume-liquide/polymère selon la revendication 4 ou 5.

## Patentansprüche

1. Fertigungsverfahren für eine feste Zwischenverbindung, die für die Beimischung in ein Flüssigbitumen aus Erdöl für die Herstellung eines polymermodifizierten Flüssigbitumens vorgesehen ist und folgende Arbeitsschritte umfasst:
- Warmes Untermischen eines Polymers, das sich zur Fertigung dieses polymermodifizierten Flüssigbitumens mit Asphaltit aus dem Bergbau eignet
- Abkühlen, und
- Aufspalten der so abgekühlten Zwischenverbindung, um ein festes polymermodifiziertes Bitumen zu erzielen, das dem Flüssigbitumen aus Erdöl beigemischt werden kann.

2. Fertigungsverfahren für eine feste Zwischenverbindung nach Anspruch 1, **dadurch gekennzeichnet, dass** die Mischung mit starker mechanischer Kraft vorgenommen wird, indem das Polymer auf eine Temperatur zwischen 110°C und 190°C und das Asphaltit auf eine Temperatur zwischen 200°C und 250°C gebracht wird.

3. Asphaltit-Polymer-Zwischenverbindung, die durch die Anwendung des Verfahrens nach Anspruch 1 oder 2 erhalten wird, **dadurch gekennzeichnet, dass** sie 5 bis 90 % Polymer enthält.

4. Polymermodifiziertes Flüssigbitumen, das einen Anteil von 5 bis 50% der Zwischenverbindung nach Anspruch 3 enthält, die einem Flüssigbitumen mit einer Penetration von 10 bis 300 Hundertsel Millimeter beigemengt wird.

5. Polymermodifiziertes Flüssigbitumen nach Anspruch 4, **dadurch gekennzeichnet, dass** es auch Schwefel enthält.

6. Straßenbelag mit polymermodifiziertem Flüssigbitumen direkt aus der Zwischenverbindung nach Anspruch 3 stammend oder mit polymermodifiziertem Flüssigbitumen nach Anspruch 4 oder 5.

## Claims

1. A method for manufacturing a solid intermediate compound, designed to be incorporated in a liquid bitumen of petroleum origin for manufacturing a liquid-bitumen/polymer, comprising the following steps:
- hot mixing of a polymer suitable for the manufacture of this liquid-bitumen/polymer with asphaltite of mining origin,
- cooling, and
- division of the intermediate compound thus cooled in order to obtain a solid-bitumen/polymer ready to be introduced into said liquid bitumen of petroleum origin.

2. A method for manufacturing a solid intermediate compound according to claim 1, **characterised in that** the mixing is carried out mechanically, in a powerful fashion, raising the polymer to a temperature between 110°C and 190°C and the asphaltite to a temperature between 200°C and 250°C.

3. An asphaltite/polymer intermediate compound obtained by implementing the method according to claim 1 or 2, **characterised in that** it comprises 5% to 90% polymer.

4. A liquid-bitumen/polymer comprising a proportion of 5% to 50% of the intermediate compound according to claim 3, introduced into a liquid bitumen with a penetration of between 10 and 300 hundredths of a millimetre.

5. A liquid-bitumen/polymer according to claim 4, **characterised in that** it also comprises sulfur.

6. A road surfacing including liquid-bitumen/polymer directly resulting from the intermediate compound according to claim 3 or liquid-bitumen/polymer according to claim 4 or 5.
